Europäisches Patentamt

European Patent Office

Office européen des brevets

(11) Publication number: **0 361 580 A2**

## (12) EUROPEAN PATENT APPLICATION

(21) Application number: **89202309.4**

(22) Date of filing: **13.09.89**

(51) Int. Cl.5: **B29D 23/22** , **B29C 55/26** , **F16L 9/12**

(30) Priority: **16.09.88 NL 8802304**

(43) Date of publication of application:
**04.04.90 Bulletin 90/14**

(84) Designated Contracting States:
**ES GR**

(71) Applicant: **WAVIN B.V.**
**Händellaan 251**
**NL-8031 EM Zwolle(NL)**

(72) Inventor: **Loman, Henricus Gerardus Maria**
**11, Friezenlaan**
**NL-7602 JJ Almelo(NL)**

(74) Representative: **Barendregt, Drs. F. et al**
**EXTERPATENT B.V. P.O. Box 90649**
**NL-2509 LP 's-Gravenhage(NL)**

(54) **Extruded biaxially stretched foam plastic pipe and procedure for the manufacture thereof.**

(57) Described is a biaxially stretched pipe (1) of foamed plastic material. The pipe (1) may have on the inside and outside a continuous smooth structure such as layers (3;4). Layer (3;4) may be composed of the same plastic as the pipe or alternatively of a different material. Also is described a process of manufacturing such a biaxially stretched foam pipe.

FIG. 1.

## Extruded biaxially stretched foam plastic pipe and procedure for the manufacture thereof

The invention relates to an extruded, biaxially stretched plastic pipe.

Such a biaxially stretched plastic pipe is known from the laid-open German Patent Application 2,357,210.

Said application describes the moulding of a biaxially stretched pipe in which the pipe has a wall composed of solid plastic. Solid is understood to mean in this case that the plastic is homogenously composed of plastic and that no bubble-type cavities are present. The present application now relates to a pipe of the above-mentioned type, the pipe being, however, a foam plastic pipe.

It has in fact been found that biaxial stretching does not need to be restricted to so-called solid-wall pipes of solid plastic but that foam plastic pipes can also be biaxially stretched with good results.

Reference is incidentally made to British Patent Specification 1,382,580 which describes the discontinuous manufacture of radially stretched foam plastic pipe.

Said patent specification makes no mention of a biaxially stretched foam plastic pipe which forms the subject of the present invention.

By stretching the foam plastic pipe both in the radial direction and in the longitudinal direction, a marked orientation of the plastic is achieved, as a result of which the plastic acquires a very characteristic structure.

In general, good results are obtained as regards mechanical properties of the foam plastic pipe if the stretching percentages are greater than 25%.

In an attractive embodiment of the extruded pipe according to the invention, the foam plastic pipe is provided with a continuous smooth structure on the inside and the outside. On the inside and the outside of the pipe, the smooth structure advantageously has the form of solid layers having a thickness of at least 0.1 mm, preferably at least 1 mm. The material of the solid layers may be identical to the material of the interior of the pipe wall but may also differ therefrom; the materials from which the layers are formed may also be different from each other.

As will be further indicated later, such a layered structure can be achieved by using a coextrusion procedure, although other procedures which do not make use of coextrusion are also available.

The invention also relates to a process for manufacturing a biaxially stretched plastic pipe at least comprising the steps of:
  a) moulding the pipe,
  b) biaxially stretching the pipe at a temperature which is above the glass transition temperature but below the melting point of the plastic,
    c) cooling the pipe, characterized in that the starting point is a pipe which is manufactured from foam plastic which has, or does not have, a continuous smooth structure on the outside and inside and in that, after being moulded by extrusion and foaming, the pipe is sized and is then cooled to below the extrusion temperature and is stretched.

In the laid-open German Patent Application 2,357,210 mentioned earlier, the plastic solid-wall pipe is biaxially stretched immediately after being moulded. It has now been found that the pipe can be processed in a plurality of ways during the biaxial stretching.

In the first place, after being moulded, the pipe may be cooled to ambient temperature and subsequently heated again to stretching temperature and then biaxially stretched. After being moulded, the pipe may also be cooled to stretching temperature and biaxially stretched at said temperature.

In all cases, an excellent result is obtained, the mechanical properties of the foam plastic pipe being appreciably improved with respect to those of the pipe in the unstretched state.

Advantageously, after being moulded and foamed, the pipe is tempered before the stretching is carried out.

A tempering can be carried out in a variety of manners; a suitable manner is that in which the pipe is kept for a period of time at a temperature which is equal to the stretching temperature. Another method of tempering is to heat the pipe to a suitable value above the stretching temperature, keep it at said temperature for a certain time and then cool it again to the stretching temperature, after which the stretching can subsequently be carried out. The tempering time and, if applicable, the difference between the tempering temperature and the stretching temperature may typically vary between 10 minutes and approx 1 hour, and 5 and 25° C respectively.

If a tempering is used, a discontinuous procedure will, in general, be chosen; a continuous procedure is, however, by no means excluded.

Advantageously, after being moulded and foamed, the pipe is cooled to a temperature which is at least 50° C below the temperature at which the pipe has been moulded.

In a specific case of a PVC foam plastic pipe, extrusion and foaming is carried out at 196° C, after which the pipe is sized and subsequently it is cooled to 120° C before carrying out the stretching operation.

As indicated earlier, the process according to the invention can be carried out either discontinuously or continuously, a foam plastic pipe being obtained in both cases having the advantages as described earlier.

As indicated earlier, the process can be carried out in a manner such that a biaxially stretched foam pipe is obtained whose wall is constructed of a plurality of distinguishable layers by using coextrusion in an apparatus having one or more extruder heads. The distinguishable layers may in that case consist of the same plastic; the materials may, however, also be different.

To carry out the process according to the invention an apparatus may be used such as is described in the previously mentioned Offenlegungsschrift 2,357,210.

In that connection, reference may also further be made to European Patent publications EP-B-0,072,064 and EP-A-0,163,336 which also describe apparatuses for carrying out a procedure of biaxially stretching plastic pipe.

The invention will now be explained in more detail by reference to the single figure which diagrammatically shows a foam pipe.

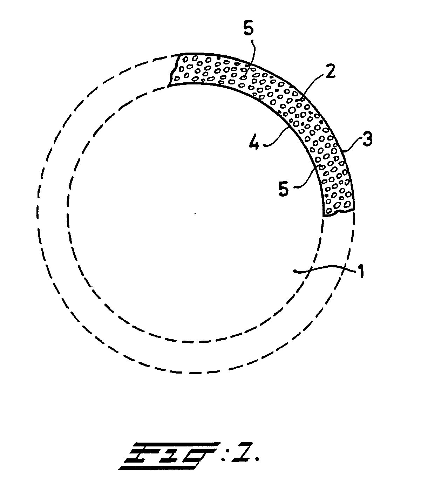

In Figure 1, a foam plastic pipe is indicated by the reference numeral 1, while the wall of the pipe is indicated by 2. The wall 2 is composed, as is indicated very diagrammatically, of a plastic which is constructed of closed cells 5. The plastic may be a plastic of the polyvinyl chloride type; other types of plastic such as polythene, polypropene and polystyrene may also be converted to foam form and biaxially stretched.

The walls of the pipe are indicated by 3 and 4 respectively. These walls may also have a foam plastic structure; said walls 3 and 4 may, however, also have a continuous smooth structure which is obtained by carrying out the extrusion of the pipe under special conditions, as a result of which, a smooth nature is obtained on the outside and inside boundary of the wall.

Stretching the foam plastic pipes as described above in the radial and in the axial direction achieves a very appreciable improvement in the mechanical properties of the pipe, which manifests itself, in particular, in an improved tensile strength, an improved impact strength, a higher modulus of elasticity, a lower creep and a better resistance to stretch corrosion. In determining the impact strength, in particular, an appreciably less brittle nature is observed.

Whether they are completely composed of foam plastic or have a wall having a solid smooth structure on the inside and outside, the biaxially stretched foam plastic pipes have proved extremely suitable for use in pipelines for conveying liquids and/or gases.

The pipe according to the invention has a specific tangential initial rigidity value of minimally 2 kN/m² as determined according to ISO DP 9969 (1988).

The pipes according to the invention are specifically suitable for conveing domestic and industrial waste water, rain and the like in sewage systems.

## Claims

1. Extruded, biaxially stretched plastic pipe, characterized in that the pipe is a foam plastic pipe (1).

2. Extruded pipe according to Claim 1, characterized in that the foam plastic pipe (1) has a continuous smooth structure on the outside and inside (3, 4).

3. Extruded pipe according to Claim 2, characterized in that, on the inside and outside of the pipe (1), the continuous smooth structure has the form of solid layers (3, 4) having a thickness of at least 0.1 mm.

4. Extruded pipe according to Claim 2-3, characterized in that, on the inside and outside of the pipe (1), the continuous smooth structure has the form of solid layers (3, 4) having a thickness of at least 1 mm.

5. Extruded pipe according to Claim 3-4, characterized in that the solid layers (3, 4) are manufactured from a plastic which is other than the plastic of the interior of the pipe wall.

6. Extruded pipe according to Claim 3-5, characterized in that the solid layers (3, 4) have been manufactured from different plastics.

7. Process for manufacturing a biaxially stretched plastic pipe at least comprising the steps of:
a) moulding the pipe,
b) biaxially stretching the pipe at a temperature which is above the glass transition temperature but below the melting point of the plastic,
c) cooling the pipe,
characterized in that the starting point is a pipe which is manufactured from foam plastic, which has, or does not have, a continuous smooth structure on the inside and outside (3, 4) and in that, after being moulded by extrusion and foaming, the pipe is sized and is then cooled to below the extrusion temperature and is stretched.

8. Process according to Claim 7, characterized in that the pipe is cooled to ambient temperature, after which it is heated for the stretching operation and biaxially stretched at that temperature.

9. Process according to Claim 7, characterized in that the pipe is cooled to the stretching temperature and is biaxially stretched at said temperature.

10. Process according to Claim 7-9, characterized in that, after being moulded and foamed, the pipe is tempered before stretching.

11. Process according to Claim 10, characterized in that the tempering is carried out by a treatment selected from:
- keeping the pipe for a suitable period of time at a temperature which is equal to the stretching temperature,
- heating the pipe to a suitable value above the stretching temperature, keeping it there for a suitable time and cooling it again to the stretching temperature.

12. Process according to one or more of Claims 7-9, characterized in that, after being moulded and foamed, the pipe is cooled to a temperature which is at least 50°C below the temperature at which it has been moulded.

13. Process according to one or more of the preceding Claims 7-12, characterized in that the procedure is carried out discontinuously.

14. Process according to one or more of the preceding Claims 7-12, characterized in that the procedure is carried out continuously.

15. Process according to one or more of the preceding claims, characterized in that a biaxially stretched foam plastic pipe (1) is manufactured whose wall is constructed of a plurality of distinguishable layers (3, 4, 5) by using coextrusion in an apparatus having one or more extruder heads arranged in line.

16. Process according to Claim 15, characterized in that the distinguishable layers (3, 4, 5) are composed of different plastic materials.

FIG. 1.